(19) Europäisches Patentamt / European Patent Office / Office européen des brevets

(11) EP 3 797 092 B1

(12) FASCICULE DE BREVET EUROPEEN

(45) Date de publication et mention de la délivrance du brevet:
**30.08.2023 Bulletin 2023/35**

(21) Numéro de dépôt: **19725361.0**

(22) Date de dépôt: **22.05.2019**

(51) Classification Internationale des Brevets (IPC):
**C02F 1/28** (2023.01)

(52) Classification Coopérative des Brevets (CPC):
**C02F 1/28; C02F 1/283;** C02F 2201/002;
C02F 2303/16; C02F 2303/24

(86) Numéro de dépôt international:
**PCT/EP2019/063235**

(87) Numéro de publication internationale:
**WO 2019/224258 (28.11.2019 Gazette 2019/48)**

(54) **PROCÉDÉ DE TRAITEMENT D'UN FLUIDE PAR FLUX ASCENDANT À TRAVERS D'UN LIT DE MÉDIA ADSORBANT**

BEHANDLUNGSVERFAHREN EINES FLÜSSIGKEITS MITTELS AUFWÄRTSSTRÖMUNG DURCH EIN BETT VON ADSORBIERENDEM MITTEL

METHOD FOR TREATING A FLUID BY UPFLOW THROUGH A BED OF ADSORBENT MEDIA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2018 FR 1854254**

(43) Date de publication de la demande:
**31.03.2021 Bulletin 2021/13**

(73) Titulaire: **Veolia Water Solutions & Technologies Support**
**94417 Saint-Maurice Cedex (FR)**

(72) Inventeur: **GAID, Abdelkader**
**75014 PARIS (FR)**

(74) Mandataire: **Vidon Brevets & Stratégie**
**16B, rue de Jouanet**
**BP 90333**
**35703 Rennes Cedex 7 (FR)**

(56) Documents cités:
EP-A1- 0 434 484    FR-A1- 2 694 209
FR-A1- 2 874 913    FR-A1- 2 894 243
US-A1- 2002 000 409

**Description**

**1. Domaine de l'invention**

La présente invention concerne le domaine du traitement des eaux par flux ascendant sur média adsorbant en fluidisation dans un réacteur.

La présente invention est adaptée à l'abattement des substances organiques, des micropolluants et/ou des ions métalliques dans une eau à l'aide de charbon actif à titre de média adsorbant.

**2. Art antérieur**

Il existe divers procédés mettant en oeuvre des réacteurs à charbon actif fonctionnant en flux ascendant.

La demande brevet FR-A-2874913 décrit notamment un procédé de traitement d'un fluide utilisant un réacteur fonctionnant à flux ascendant dans un lit de charbon actif tout en assurant une séparation gravitaire en partie haute du réacteur entre les particules de charbon actif et le fluide. Le fluide traité est ensuite récupéré par surverse. La concentration moyenne en charbon actif est comprise entre 100 et 300 g/l sur la hauteur du lit expansé et la concentration moyenne en charbon actif est inférieure à 2 mg/l en partie supérieure de la zone de lit décanté. La granulométrie du charbon actif utilisé est comprise entre 100 et 800 $\mu$m et la vitesse ascensionnelle du fluide est comprise entre 2 et 20 m/h, avantageusement entre 8 et 15 m/h. Le temps de contact est compris entre 5 et 60 min, avantageusement entre 8 et 15 min.

Par ailleurs, la demande FR-A-3003477 décrit notamment un procédé de traitement d'un fluide utilisant un réacteur compact d'adsorption sur charbon actif à flux ascendant pour l'élimination simultanée des substances organiques et des micropolluants. Comme pour la précédente demande de brevet, l'eau à traiter est admise de façon uniforme dans le bas de l'ouvrage pour traverser le lit de charbon actif de bas en haut. Le réacteur fonctionne à une vitesse suffisamment faible pour ne pas provoquer une expansion sensible du lit de charbon actif, ce qui assure à la fois une filtration et une adsorption des matières présentes dans l'eau. La vitesse ascensionnelle du fluide varie alors entre 10 et 20 m/h et de préférence entre 12 et 15 m/h. Une phase d'expansion est prévue au cours de laquelle l'eau circule à une vitesse suffisamment forte, comprise entre 15 à 40 m/h, pour provoquer une expansion sensible du lit de charbon actif qui subit alors un lavage par l'eau. La granulométrie du charbon actif utilisé se situe entre 0.3 et 1.5 mm et de préférence entre 0.6 et 1.2 mm.

La vitesse minimale de fluidisation d'un lit de média constitué de particules solides est la vitesse minimale que doit avoir un fluide pour permettre une légère mise en mouvement des particules qui se mettent en suspension. Elle dépend de la taille et de la densité des particules solides ainsi que de la viscosité du fluide. Elle est donnée par la relation (selon Wen et Yu) :

•
$$V_f = Re_f \cdot \mu / (d_{90} \cdot \rho), \text{ avec } Re_f = (33.7^2 + 0.0408 \, Ar)^{0.5} - 33.7$$

et

$$Ar = d^3{}_{90} \, \rho \, (\rho_s - \rho) \, g / \mu^2$$

dans laquelle :

$Re_f$ est le nombre de Reynolds pour la fluidisation ;
Ar est le nombre d'Archimède ;
$V_f$ est la vitesse de fluidisation (m/s) ;
$\rho_s$ est la masse volumique du média (g/m$^3$) ;
$d_{90}$ est le diamètre du média à 90% de passant (m) ( = $d_{10} \cdot CU^{1.67}$) ; et $d_{10}$ est la taille effective (m) et CU est le coefficient d'uniformité ;
$\rho$ est la masse volumique du fluide (g/m$^3$) ;
$\mu$ est la viscosité du fluide (Pa.s).

Le tableau 1 ci-dessous montre les vitesses minimales de fluidisation pour différentes granulométries de charbon actif dans un flux ascendant d'eau :

**Tableau 1**

| $d_{10}$ (μm) | 100 | 200 | 300 | 400 | 600 | 800 | 1200 |
|---|---|---|---|---|---|---|---|
| $V_{f(min)}$ (m/h) | 0.3 | 0.5 | 1.1 | 2 | 4.5 | 7.8 | 16.2 |

Quand la vitesse du fluide devient supérieure à la vitesse minimale de fluidisation le lit de charbon actif connaît un phénomène d'expansion dans le réacteur, caractérisé par un taux d'expansion. Le taux d'expansion correspond à l'augmentation de la hauteur du lit lors du passage du fluide à la vitesse de fluidisation par rapport à la hauteur du lit au repos. Pour un lit de particules donné, l'expansion est équivalente à la mise en suspension des particules. L'expansion des particules change en fonction de la vitesse ascendante. En augmentant de façon progressive cette vitesse, l'expansion passe d'un état d'immobilité à un état où les particules se mettent en suspension jusqu'à obtenir une hauteur double de la hauteur initiale (hauteur au repos). Dans ce cas, les particules deviennent indépendantes les unes des autres.

Le tableau 2 ci-dessous montre la vitesse de fluidisation permettant d'atteindre un taux d'expansion donné pour une granulométrie de charbon actif donnée:

**Tableau 2**

| | Vitesse de fluidisation (m/h) | | | | | |
|---|---|---|---|---|---|---|
| Taux d'expansion | 10% | 20% | 40% | 50% | 80% | 100% |
| Granulométrie 0.2 mm | 0.8 | 1.1 | 1.7 | 2.1 | 3.3 | 4.2 |
| Granulométrie 0.4 mm | 3.0 | 4.2 | 6.9 | 8.4 | 13.3 | 16.8 |
| Granulométrie 0.6mm | 6.7 | 9.4 | 15.4 | 18.7 | 29.6 | 37.4 |
| Granulométrie 0.8mm | 11.7 | 16.3 | 26.8 | 32.5 | 51.5 | 65.1 |
| Granulométrie 1.2 mm | 24.5 | 34 | 55.8 | 67.8 | 107.3 | 135.7 |

Les deux demandes de brevet de l'art antérieur citées préconisent un réacteur dimensionné pour des flux ascendants ayant avantageusement une vitesse comprise entre 8 m et 15 m/h.

Pour la demande de brevet FR-A-2874913, la granulométrie recommandée du charbon actif est comprise entre 0.1 et 0.8 mm et une vitesse maximale de 15 m/h est préconisée. A cette vitesse, toutes les fines de diamètre inférieur à 0.3 mm ont alors un taux d'expansion supérieur à 100% et se retrouvent en sortie avec le fluide traité.

Pour la demande de brevet FR-A-3003477, la granulométrie recommandée est comprise entre 0.6 et 1.2 mm et une vitesse maximale de 15 m/h est préconisée en phase de filtration/adsorption. A cette vitesse, pour une granulométrie médiane de 0.8 mm, l'expansion du lit n'est que de 15 %. A une telle vitesse, il est possible d'éviter une fuite en particules. Cependant, les particules de diamètre 1.2 mm ne sont pas fluidisées ce qui conduit à une expansion très faible du lit de charbon actif pendant le fonctionnement. A contrario, l'étape de lavage est réalisée à une vitesse maximale de 40 m/h. A une telle vitesse, les fines de diamètre inférieur ou égal à 0.6 mm ont une expansion de plus de 100% et se retrouvent en sortie avec le fluide traité.

Ainsi, les procédés selon l'art antérieur nécessitent un contrôle accru de la vitesse de fluide ascendant permettant de trouver le moins mauvais compromis, pour une gamme de granulométrie de charbon actif donné, entre d'une part une expansion suffisante du lit de charbon actif, notamment des particules de plus grande granulométrie, et d'autre part la fuite limitée des particules de plus faible granulométrie.

Comme décrit précédemment, pour les gammes de granulométrie du charbon actif usuellement utilisées, il est cependant quasiment impossible avec les procédés de l'art antérieur de favoriser l'un sans que cela ne soit au détriment de l'autre.

Afin d'utiliser toute la masse de charbon actif présente dans le réacteur, le lit de charbon actif doit généralement être fluidisé à un taux d'expansion qui peut être théoriquement compris entre 10 et 100 %. En dessous de 10 %, la surface spécifique du media peut ne pas être totalement utilisée pour l'adsorption.

La fuite de charbon actif est de plus particulièrement préjudiciable puisqu'elle entraîne un surcoût résultant notamment de la réinjection de charbon actif neuf pour compenser cette perte. De plus elle entraîne une surcharge, non nécessaire, en matières en suspension (MES) dans le fluide traité, surcharge qui doit être absorbée par des filtres disposés en aval du procédé de traitement par flux ascendant qui ont donc tendance à se boucher plus rapidement.

Afin de tenter de pallier la fuite des particules du lit fluidisé tout en gardant une vitesse de flux ascendant suffisamment élevée, les utilisateurs de procédés tels que ceux de l'art antérieur peuvent injecter un polymère afin de former un floc de charbon actif.

Ceci représente une étape supplémentaire et un surcoût dans la mise en oeuvre du procédé.

### 3. Objectifs de l'invention

L'invention a pour objectif de pallier au moins certains des inconvénients de l'art antérieur.

L'invention a notamment pour objectif de proposer un procédé dans une installation destinée au traitement d'un fluide par flux ascendant à travers un lit de média adsorbant permettant une bonne fluidisation du lit de média adsorbants tout en limitant fortement, voire en empêchant, toute perte de média adsorbant.

Un autre objectif de l'invention est de proposer, au moins selon certains modes de réalisation, un procédé dans une installation permettant de limiter les pertes en fluide.

Un autre objectif de l'invention est de proposer, au moins selon certains modes de réalisation, un procédé dans une installation qui soit plus efficace et plus compacte que les installations de l'art antérieur.

L'invention a également comme objectif de proposer des procédés de fonctionnement de l'installation selon l'invention.

Un autre objectif de l'invention est, au moins selon certains modes de réalisation, de proposer un procédé permettant de réduire de façon optimale la consommation en média adsorbant.

Un autre objectif de l'invention est, au moins selon certains modes de réalisation, de proposer un procédé ne nécessitant pas l'ajout de polymères de lestage.

### 4. Exposé de l'invention

L'invention concerne un procédé de traitement d'un fluide par passage d'un flux ascendant de ce fluide à travers un lit de particules de média adsorbant selon la revendication 1.

Le procédé comprend la fourniture d'un réacteur destiné à contenir le lit de particules de média adsorbant, le réacteur comprenant :

-    un moyen d'injection et de répartition de fluide à traiter, disposé en partie basse, destiné à former le flux ascendant de fluide au sein du réacteur et permettant la fluidisation et l'expansion du lit de particules de média adsorbant;
-    un moyen de déflexion de fluide, disposé en partie haute, destiné à réduire la vitesse du flux ascendant de fluide et permettant de former une zone de tranquillité de fluide;
-    un moyen de récupération de fluide traité, disposé en aval de la zone de tranquillité; et,
-    optionnellement : un moyen d'injection de particules de média adsorbant, un moyen d'extraction de particules de média adsorbant et un moyen de recirculation du fluide traité.

Le concept inventif de la présente invention repose notamment sur la présence du moyen de déflexion de fluide disposé en partie haute du réacteur. En effet, le moyen de déflexion permet de réduire la vitesse du flux ascendant de fluide et de créer ainsi une zone de tranquillité. On entend par zone de tranquillité une zone où la vitesse du flux ascendant est fortement réduite. Les particules de média adsorbant, notamment celles de plus faible taille, viennent buter contre le moyen de déflexion et du fait du ralentissement de la vitesse du flux ascendant au niveau du moyen de déflexion, retombent vers le bas du réacteur. La zone en aval est ainsi quasi exempte de particules de média adsorbant et un fluide traité exempt de particules de média adsorbant en suspension peut être récupéré.

Le moyen de déflexion permet d'utiliser des vitesses de flux ascendant de fluide supérieures à celles généralement utilisées dans les installations de l'art antérieur tout en réduisant fortement, voire en empêchant toute fuite en particules de média adsorbant. Ainsi, cela permet d'obtenir une installation plus compacte. De plus, le moyen de déflexion permet de s'affranchir de l'utilisation de polymères de lestage même à des vitesses de flux ascendants de fluide relativement élevées.

Le fluide à traiter peut être n'importe quel fluide comprenant des substances polluantes pouvant être adsorbées par un média adsorbant. Le fluide à traiter peut notamment être une eau contaminée par des substances organiques, des micropolluants et/ou des ions métalliques.

Les particules de média adsorbant sont des grains ou micrograins de charbon actif.

Le lit de media adsorbant présente préférentiellement une hauteur comprise entre 0,2 m et 1,20 m.

Le réacteur selon l'invention peut être de forme cylindrique ou carrée. Préférentiellement le réacteur a une hauteur comprise entre 3 mètres et 10 mètres. Très préférentiellement, le réacteur a une hauteur comprise entre 3 mètres et 6 mètres.

Le moyen d'injection et de répartition de fluide à traiter permet d'injecter le fluide à traiter en partie basse du réacteur pour former un flux ascendant de fluide au sein du réacteur et obtenir la fluidisation et l'expansion du lit de particules de média adsorbant. Avantageusement, le moyen d'injection et de répartition de fluide permet une répartition uniforme du fluide en partie basse du réacteur. Ceci peut notamment être mis en oeuvre par des rampes d'alimentation uniformément réparties en partie basse du réacteur.

Selon un premier mode de réalisation, le moyen de déflexion de fluide comprend des lamelles parallèles entre elles et inclinées par rapport à la verticale d'un angle θ.

Leur inclinaison par rapport à la verticale et leur dimensionnement peuvent être ajustés en fonction de la gamme de granulométrie de média adsorbant utilisé. La relation suivante permet de calculer le seuil de coupure des lamelles, le seuil de coupure étant la propriété d'une barrière physique à arrêter physiquement tous les éléments dont la taille dépasse une valeur limite.

$$d_p = \sqrt{\frac{18\mu_0[\sin\theta + \frac{l}{s}\cos\theta]}{g(\rho_p - \rho)[1 - (1-\phi_S)(\sin\theta + \frac{l}{s}\cos\theta)]}}$$

dans laquelle :

$d_p$ : diamètre de la particule (m) ;
$\rho_p$ : masse volumique de la particule (kg/m$^3$) ;
$\mu_0$ : viscosité de l'eau (kg/m.s) ;
$\rho$ : masse volumique de l'eau (kg/m$^3$) ;
θ : angle d'inclinaison des lamelles par rapport à la verticale (degré)
l : longueur d'une lamelle (m)
s : surface d'une lamelle (m$^2$)
$\phi_S$ : fraction volumique de solides

Les lamelles peuvent être inclinées par rapport à la verticale d'un angle θ compris entre 50° et 60°. Avantageusement, les lamelles peuvent notamment être inclinées par rapport à la verticale d'un angle θ voisin de 60°.

Les lamelles peuvent être espacées l'une de l'autre d'une distance comprise entre 25 mm et 100 mm. Les lamelles peuvent notamment être espacées l'une de l'autre d'une distance comprise entre 36 et 42 mm. Cet espacement est particulièrement approprié pour des particules de média adsorbant, en particulier des grains ou des micrograins de charbon actif, de granulométrie comprise entre 400 et 1300 μm.

La longueur des lamelles est très grande devant l'espacement entre les lamelles. Elle peut par exemple être de l'ordre du mètre, notamment égale à un mètre.

Dans ce premier mode de réalisation, les lamelles sont disposées contre l'ensemble du flux ascendant de fluide. La vitesse de l'eau diminue au sein des lamelles, ce qui permet de créer une zone de tranquillité où les particules peuvent décanter. Le fluide traité peut alors être récupéré par surverse.

Selon un second mode de réalisation de l'invention, le moyen de récupération de fluide comprend une goulotte de forme prismatique avec des faces latérales formant un angle α de 45° à 70° par rapport à l'horizontale et qui sont munies chacune d'un premier déversoir de fluide et d'un déflecteur faisant office de chicane comme moyen de déflexion. L'angle α peut notamment avoir une valeur voisine de 60°. Une telle goulotte a déjà été décrite dans la demande de brevet publiée sous le numéro : FR2694209.

Le déflecteur de la goulotte peut être constitué d'une plaque lisse. Il peut également revêtir l'aspect d'une grille dont la taille des mailles est adaptée aux dimensions des particules de média adsorbant. De manière avantageuse, il peut être constitué d'un empilement de plaques ou d'un profil formant un conduit en nid d'abeilles. L'orientation du déflecteur est variable. Selon un mode de réalisation avantageux il est placé selon une direction parallèle par rapport au premier déversoir d'eau.

Selon un mode de réalisation avantageux, le premier déversoir de fluide est muni à son extrémité inférieure d'une bavette souple et mobile assurant une action de clapet.

Selon un autre mode de réalisation avantageux le premier déversoir est orienté selon une direction orthogonale par rapport aux faces latérales de la goulotte.

En outre, selon un autre mode de réalisation avantageux, les bords supérieurs de la goulotte sont repliés de façon à constituer un second déversoir grâce auquel le fluide traité et exempt de particules de média adsorbant peut être récupéré.

Dans ce second mode de réalisation, une partie du flux de fluide se déverse pardessus le premier déversoir de la goulotte et est ralentie par la chicane, ce qui créé ainsi une zone locale de tranquillité. Les particules de média adsorbant tendent à retomber par gravité alors que le fluide traité, totalement exempt de particules de média adsorbant, s'accumule et peut être récupéré.

Le réacteur selon la présente invention peut également comprendre un moyen de recirculation du fluide traité. Ce moyen de recirculation permet de renvoyer au moins une partie du fluide traité avec le fluide à traiter et donc de diminuer la concentration en substances polluantes du fluide à traiter.

Le réacteur selon la présente invention peut également comprendre un moyen d'extraction des particules de média adsorbant et un moyen d'injection de particules de média adsorbant, permettant respectivement de prélever une partie du lit fluidisé de particules de média adsorbant dans le réacteur et d'ajouter des particules de média adsorbant, neuves ou régénérées, dans le réacteur. Ceci permet donc de renouveler le lit de particules de média adsorbant en prélevant des particules de média adsorbant au moins en partie saturées par des substances polluantes qui y sont adsorbées et en injectant des particules de média adsorbant neuves ou régénérées.

L'installation peut également comprendre une unité de séparation des particules de média adsorbant extraites du réacteur par filtration solide/liquide. Ceci permet de séparer les particules de média adsorbant d'une phase liquide en filtrant la partie du lit fluidisé extraite à l'aide du moyen d'extraction de particules de média adsorbant du réacteur pour, d'une part évacuer des particules de média adsorbant saturées, au moins en partie, afin d'en assurer le traitement, la régénération ou le rejet et d'autre part pour récupérer une phase liquide qui peut être recirculée avec le fluide à traiter. L'unité de filtration peut par exemple être une benne filtrante ou tout autre dispositif équivalent permettant la concentration par la filtration des particules de média adsorbant.

Finalement, l'installation peut également comprendre une unité d'analyse permettant de mesurer la capacité d'adsorption d'échantillons issus du lit fluidisé. Dans le cas de charbon actif, l'unité d'analyse peut notamment mesurer l'indice d'iode du charbon actif.

La présente invention concerne un procédé de traitement d'un fluide à traiter dans une installation telle que décrite ci-dessus.

Le procédé comprend une fourniture de particules de média adsorbant formant un lit de particules de média adsorbant dans le réacteur. Le procédé comprend également une injection continue du fluide à traiter au niveau desdits moyens d'injection de fluide afin de former un flux ascendant de fluide, ayant une vitesse permettant la fluidisation du lit de particules de médias et son expansion. Le procédé comprend enfin une récupération continue d'un fluide traité au niveau du moyen de récupération du fluide traité.

Ainsi le procédé selon l'invention permet de traiter en continu un fluide à traiter tout en limitant, voire en supprimant, les fuites en particules de média adsorbant. De plus des vitesses de flux ascendants relativement élevées peuvent être utilisées afin d'obtenir un taux d'expansion du lit fluidisé de particules de média adsorbant suffisamment élevé pour obtenir un traitement efficace du lit de particules de média adsorbant sans pour autant craindre la fuite de particules de média adsorbant.

Le procédé selon l'invention est particulièrement adapté au traitement tertiaire d'eaux usées ou bien pour la production d'eau potable, et notamment de substances polluantes étant des substances organiques, des micropolluants et/ou des ions métalliques.

Avantageusement, la vitesse du flux ascendant est ajustée de telle sorte à former une zone d'expansion du lit de particules de média adsorbant et une zone de transition intercalée entre la zone d'expansion et le moyen de déflexion, la concentration en particules de média adsorbant étant moins dense dans la zone de transition que dans la zone d'expansion. La zone de transition intercalée entre la zone d'expansion du lit de médias adsorbant et le moyen de déflexion comprend uniquement les particules de média adsorbant les plus fines. Ce sont uniquement ces particules les plus fines qui sont arrêtées au niveau du moyen de déflexion. La vitesse du flux de fluide ascendant peut en particulier être ajustée de telle sorte à obtenir un taux d'expansion moyen du lit de particules de média adsorbant compris entre 10 et 90 %. On entend par taux d'expansion moyen le taux d'expansion calculé pour une particule de média adsorbant de taille moyenne. Le taux d'expansion moyen peut notamment être voisin de 60%.

Selon des modes de réalisation particuliers, la durée impartie pour la réaction d'adsorption peut être ajustée pour être comprise entre 5 et 20 minutes.

La concentration en particules de média adsorbant dans le réacteur est comprise entre 1 g/l et 300 g/l. Préférentiellement, la concentration en particules de média adsorbant est comprise entre 1g/l et 100g/l. Dans des modes de réalisation particuliers, l'eau traitée est recirculée au moins en partie dans le réacteur. Ceci permet de diminuer la concentration initiale en substances polluantes et donc de réduire le dosage nécessaire en particules de média adsorbant. Selon un mode de réalisation avantageux, le procédé comprend en outre une extraction, de manière continue ou de manière séquentielle, d'une partie du lit de particules de média adsorbant du réacteur et une injection de particules de média adsorbant, neuves ou régénérées, de telle sorte à conserver une concentration constante en particules de média adsorbant dans ledit réacteur. Ceci permet de remplacer des particules de média adsorbant saturées par des polluants, au moins en partie, par des particules de média adsorbant neuves ou régénérées. Préférentiellement, le procédé comprend en outre une séparation solide/liquide du lit de particules de média adsorbant extrait permettant de concentrer les particules de média adsorbant et de récupérer une phase liquide. Cette phase liquide peut être réinjectée dans le réacteur. Ceci permet de limiter les pertes en fluide au sein du procédé. Les particules de média adsorbant concentrées peuvent être rejetées ou bien alternativement régénérées. Dans un mode de réalisation particulièrement avantageux, le procédé peut en outre comprendre une prise d'échantillon dans le lit de particules de média adsorbant dudit réacteur et une analyse du taux de saturation en substances polluantes de particules dudit échantillon : l'extraction d'une partie du lit de particules de média adsorbant dudit réacteur étant mise en oeuvre de façon séquentielle quand le taux de saturation dépasse une valeur seuil. Une telle mise en oeuvre permet de réduire sensiblement la consommation en particules de média adsorbant. Par exemple, quand le média adsorbant est le charbon actif, le taux de saturation des particules peut être contrôlé par l'indice d'iode (qui indique à contrario la capacité d'adsorption du charbon). Cette mesure de l'indice d'iode peut notamment être effectuée selon la norme internationale ASTM n° D4607. Une valeur de l'indice d'iode inférieure à 300 mg/g peut avantageusement être choisie pour initier le renouvellement en particules de média adsorbant.

Les particules de média adsorbant sont des grains ou des micrograins de charbon actif. Ces particules sont calibrées avec une granulométrie comprise entre 400 et 1300 $\mu$m, préférentiellement comprise entre 600 et 1300 $\mu$m, préférentiellement entre 600 et 1000 $\mu$m. Selon l'invention, la vitesse du flux de fluide ascendant, notamment dans le cas où le fluide est une eau à traiter, est de 20m/h à 40 m/h. De telles vitesses permettent une expansion suffisante du lit fluidisé de particules de média adsorbant pour assurer un traitement optimal sans pour autant entraîner des fuites de particules.

## 5. Liste des figures

L'invention, ainsi que les différents avantages qu'elle présente, seront plus facilement compris grâce à la description qui va suivre de deux modes de réalisation particuliers donnés en référence aux dessins, dans lesquels :

- la figure 1 est une vue schématique d'une installation dont le réacteur à flux ascendant comprend des lamelles inclinées et parallèles entre elles ;
- la figure 2 représente les lamelles inclinées du réacteur de l'installation selon la figure 1;
- la figure 3 est une vue schématique d'un réacteur à flux ascendant comprenant des goulottes munies de baffles ;et,
- la figure 4 représente une goulotte du réacteur de l'installation selon la figure 3.

## 6. Description détaillée d'un mode de réalisation

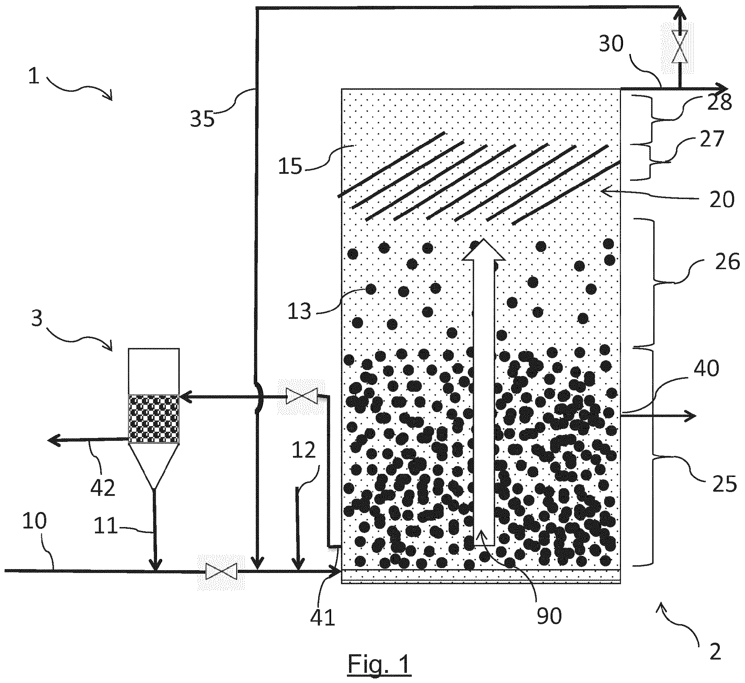

En référence à la Figure 1, une installation 1 destinée au traitement tertiaire d'eaux usées ou à la production d'eau potable est représentée. L'installation 1 comprend un réacteur 2 contenant un lit de particules 13 de charbon actif.

Les particules 13 de charbon actif ont une granulométrie calibrée entre 600 et 1300 $\mu$m et comprennent généralement une proportion strictement inférieure à 5% de particules de taille inférieure à 400 $\mu$m. La concentration en particules 13 de charbon actif peut être ajustée à une concentration comprise entre 1 g/l et 100 g/l selon le type d'eau à traiter.

Le réacteur 2 tel que représenté a une forme cylindrique. La hauteur de ce type de réacteur est généralement comprise entre 3 mètres et 10 mètres. Une canalisation d'amenée d'eau 10 permet de fournir une eau à traiter qui est injectée dans le réacteur 2. L'eau à traiter est injectée par des rampes d'alimentation disposées en partie basse du réacteur 2 et permettant une répartition uniforme de l'eau 15 dans le réacteur. Ceci permet de former un flux ascendant 90 d'eau 15 au sein du réacteur 2. Le flux ascendant 90 d'eau a une vitesse telle que cela engendre la fluidisation et l'expansion du lit de particules 13 de charbon actif;

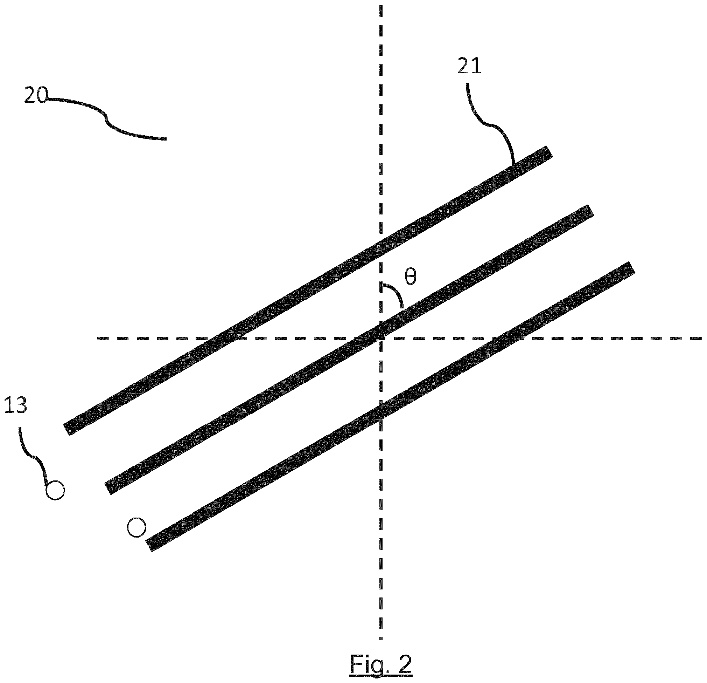

En référence en outre à la Figure 2, un ensemble 20 de lamelles 21 inclinées par rapport à la verticale d'un angle $\theta$ voisin de 60° et espacées l'une de l'autre d'une distance comprise entre 36 et 42 mm est disposé en partie haute du réacteur 2. Les lamelles ont une longueur d'un mètre environ. L'ensemble 20 de lamelles 21 permet de dévier le flux ascendant 90 et de réduire ainsi fortement la vitesse du flux incident, formant ainsi une zone de tranquillité 27. Les particules 13 arrivées au niveau des lamelles 21 se déposent sur les lamelles 21 et glissent vers le bas, tendant donc à retomber vers le fond du réacteur du fait de la gravité. Dans la zone 28 située au-dessus dudit ensemble 20 de lamelles 21, l'eau 15 ne contient plus de particules 13.

La vitesse du flux ascendant 90 d'eau est calculée pour ne pas dépasser un taux d'expansion du lit de 60 % pour une granulométrie de 0.8 mm. Ceci permet de former une zone d'expansion 25 du lit fluidisé dans laquelle se trouve une grande majorité des particules 13 du lit fluidisé. Cela permet également de former une zone de transition 26 d'au moins 1 mètre à 1.5 mètres de hauteur en dessous de l'ensemble 20 de lamelles 21 dans laquelle les particules 13 sont faiblement concentrées. Dans ce cas, seules les plus fines particules (< 0.4 mm) qui auraient une expansion de 100 % ou plus seront arrêtées par l'ensemble 20 de lamelles 21.

Le réacteur 2 fonctionne en continu à des vitesses de flux ascendant 90 d'eau généralement comprises entre 20 et 40 m/h. Ces vitesses de flux ne sont pas atteignables avec des réacteurs selon l'art antérieur sans occasionner d'importantes fuites en charbon actif. La vitesse de flux ascendant 90 peut également être ajustée en fonction de la durée souhaitée impartie pour la réaction d'adsorption. Cette durée peut être comprise entre 5 min et 20 min.

Une eau traitée est récupérée par surverse dans une canalisation 30. Une partie au moins de l'eau traitée est recirculée dans le réacteur 2 grâce à une canalisation 35 permettant le mélange de cette partie d'eau traitée recirculée avec l'eau à traiter. Ceci permet notamment de réduire la consommation en charbon actif. En effet, par exemple, la recirculation de 50% du débit d'une eau avec un COD de 2 mg/l permet de passer d'une eau brute à traiter ayant un COD de 6 mg/l à une eau à traiter après mélange ayant un COD de 4.66 mg/l. Ainsi, la recirculation permet de réduire le dosage nécessaire en charbon actif.

Des échantillons du lit fluidisé en particules 13 de charbon actif sont prélevés régulièrement au moyen d'une sortie 40 disposée en partie médiane du réacteur 2.

L'indice d'iode de ces échantillons est évalué dans une unité d'analyse (non représentée). Le charbon actif neuf présente un indice d'iode variable généralement compris entre 900 et 1200 mg/g. Plus le charbon actif devient saturé en substances adsorbées, moins il devient efficace pour le traitement de l'eau et plus sont indice d'iode diminue. Une mesure d'indice d'iode supérieure à 300 mg/g autorise à maintenir le lit fluidisé de charbon actif dans le réacteur. A contrario, un indice d'iode inférieur ou égal à 300 mg/g implique que le lit fluidisé de charbon actif doit être renouvelé, au moins en partie. A cette fin, une sortie 41, disposée préférentiellement en partie basse, permet d'extraire par un équipement d'extraction mécanique ou hydraulique au moins une partie du lit fluidisé du réacteur 2. En parallèle, pour que la concentration en particules 13 de charbon actif reste constante au sein du réacteur 2, des particules de charbon actif neuf ou régénéré doivent être introduites dans le réacteur 2 au niveau d'un point d'injection en charbon actif 12. Ce processus séquentiel d'analyses régulières de l'indice d'iode d'échantillons du lit fluidisé et d'extraction du lit fluidisé, au moins en partie, quand l'indice d'iode devient inférieur ou égal à 300 mg/g permet de réduire la consommation en particules de charbon actif de 20 à 40%, en comparaison avec des procédés où les particules de charbon actif sont remplacées périodiquement sans tenir compte de leur plus ou moins grand degré de saturation.

La partie du lit fluidisé extrait au niveau de la sortie 41 est ensuite filtrée dans une benne filtrante 3, ou équivalent (ex : tamis filtrant). La phase liquide récupérée, appelée égouttures, peut alors être recirculée dans le réacteur 2 grâce à une canalisation 11 permettant leur mélange avec l'eau à traiter. De ce fait, les pertes en eau selon le procédé de traitement sont très faibles et restent inférieures à 1 %. Un concentrât de particules de charbon actifs peut être évacué via une sortie 42 pour rejet ou régénération.

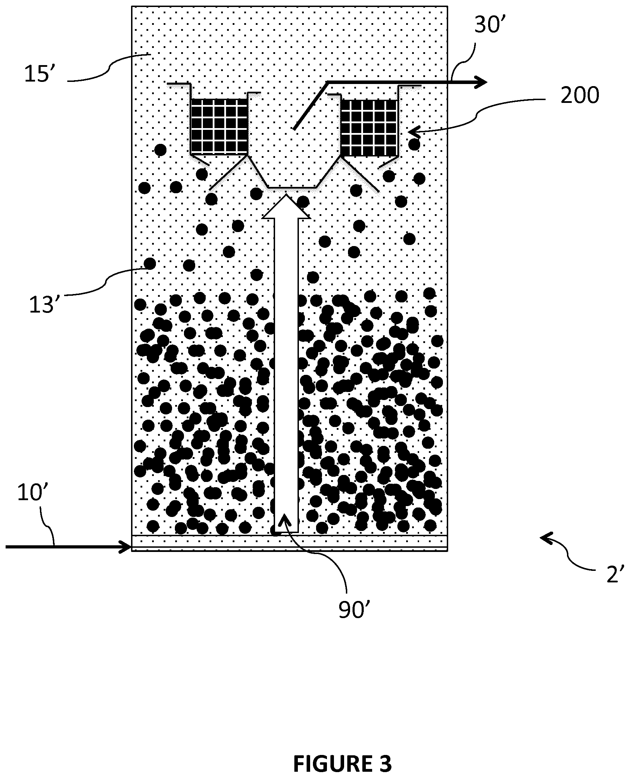

La Figure 3 présente un réacteur 2' avec un moyen de déflexion alternatif à l'ensemble 20 de lamelles 21 et un moyen de collecte et d'évacuation d'eau alternatif par goulotte. Un tel réacteur 2' peut faire partie d'une installation telle que précédemment décrite et être utilisé dans un procédé tel que précédemment décrit, utilisant les mêmes paramètres. La description ci-dessous se focalise sur les éléments différentiant le réacteur 2' du réacteur 2 ci-dessus décrit. Une canalisation d'amenée d'eau 10' permet de fournir une eau à traiter qui est injectée dans le réacteur 2'. L'eau à traiter est injectée par des rampes d'alimentation disposées en partie basse du réacteur 2' et permettant une répartition uniforme de l'eau 15' dans le réacteur 2'. Ceci permet de former un flux ascendant 90' d'eau 15' au sein du réacteur 2'. Le flux ascendant 90' d'eau engendre la fluidisation et l'expansion du lit de particules 13' de charbon actif. Les goulottes 200 sont munies de déflecteurs. Ces déflecteurs sont espacés de 50-200 mm par rapport aux faces latérales des goulottes. Ils font office de chicanes et empêchent les particules en suspension de sortir avec l'eau traitée. Les particules se retrouvent réinjectées au sein du réacteur.

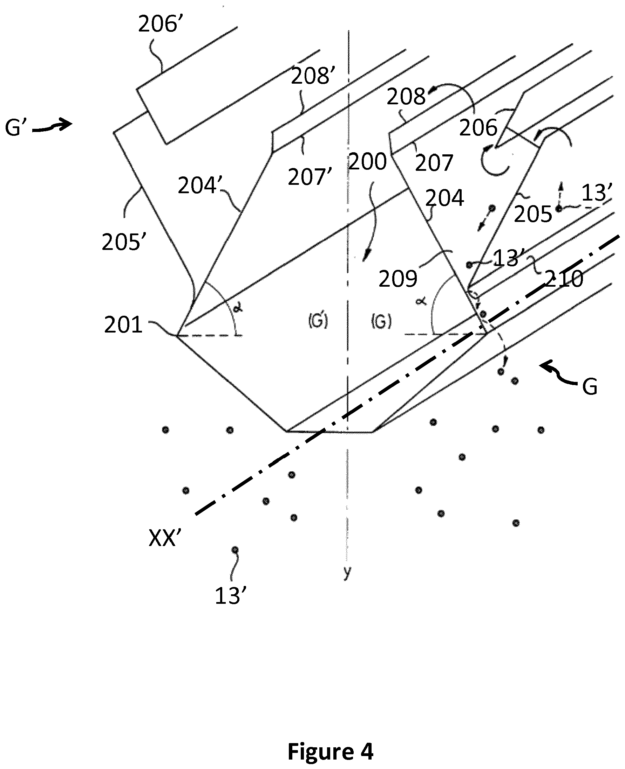

En référence à la Figure 4, une goulotte 200 disposée en partie haute du réacteur joue le rôle de moyen de déflexion et permet de récupérer une eau traitée quasi-exempte de particules 15' dans une canalisation 30'. La goulotte 200 a une forme polyédrique de type prisme dont les faces latérales (204, 204') forment un angle $\alpha$ de 45 à 70 degrés par rapport à l'horizontale. Préférentiellement, les faces latérales forment un angle de 60 degrés par rapport à l'horizontale. Les faces latérales de la goulotte sont munies chacune d'un premier déversoir d'eau (205, 205') faisant face à un déflecteur (206, 206') constituant une chicane.

Les bords supérieurs (207, 207') de la goulotte 200 sont avantageusement repliés avec une inclinaison variable pour constituer un second déversoir (208, 208'). Le premier déversoir d'eau 205 est orienté préférentiellement selon une direction orthogonale par rapport aux faces latérales de la goulotte 200. De par sa configuration prismatique, la goulotte est construite de manière symétrique autour de l'axe central XX' et est ainsi constituée de deux demi-goulotte G, G' Dans la suite de la description, on se limitera à décrire le trajet de l'eau dans la demi-goulotte G, symbolisé par de petites flèches sur la figure 4. Le flux ascendant d'eau 90' entraîne les particules 13' les plus fines dans la direction du premier déversoir d'eau 205. Le flux d'eau après avoir atteint le seuil du premier déversoir 205, s'écoule en aval de celui-ci. Les turbulences de l'eau sont alors limitées au moyen du déflecteur 206 formant une chicane sur le trajet du flux. Préférentiellement et tel que représenté, le déflecteur est constitué d'une plaque lisse. Il peut également revêtir l'aspect d'une grille dont la taille des mailles est adaptée aux dimensions des grains de charbon actif à retenir. De manière avantageuse, il peut être constitué d'un empilement de plaques ou d'un profil formant un conduit en nid d'abeilles. L'orientation du déflecteur 206 est variable. Avantageusement, il est placé selon une direction parallèle par rapport au premier déversoir d'eau 205. Le flux d'eau butant contre la chicane est ralenti et canalisé dans une zone de tranquillité 209 délimitée par la face latérale inclinée 204 de la goulotte. L'eau s'accumule ensuite dans cette zone et suit un trajet ascendant jusqu'à atteindre le seuil du second déversoir 208. Une eau exempte en particules 13' peut ainsi être récupérée en aval du second déversoir 208. Les particules 13' de charbon actif, entraînées par le flux d'eau, sont également recueillies dans la zone de tranquillité 209 et de par l'inclinaison de celle-ci, glissent le long de la face latérale 204 de la goulotte jusqu'à l'extrémité inférieure du premier déversoir 205. Comme on peut le visualiser sur la figure 4, l'extrémité inférieure du premier déversoir 205 peut avantageusement être munie d'une bavette mobile 210, jouant le rôle de clapet.

Les particules 13' de par leur propre poids soulèvent la bavette et retournent dans la masse du lit fluidisé.

**Revendications**

1. Procédé de traitement d'un fluide comprenant :

   - la fourniture dans un réacteur (2, 2') de particules (13, 13') de média adsorbant constituées de grains ou de micrograins de charbon actif calibrées présentant une granulométrie comprise entre 400 $\mu$m et 1300 $\mu$m dans lequel la concentration en particules de média adsorbant dans ledit réacteur est comprise entre 1 g/l et 300 g/l ;
   - l'injection continue d'eau à traiter au niveau d'un moyen (10, 10') d'injection et de répartition de fluide à traiter en partie basse dudit réacteur pour former un flux ascendant (90, 90') de fluide ayant une vitesse comprise entre 20 et 40 m/h et fluidiser le lit de particules de média adsorbant en formant une zone d'expansion (25) du lit de particules de média adsorbant et une zone de transition (26) moins dense en particules de média adsorbant que ladite zone d'expansion,
   - la réduction de la vitesse dudit flux ascendant de fluide et la formation d'une zone de tranquillité de fluide (27, 209) grâce à des moyens (20, 200) de déflexion de fluide prévus en partie haute du réacteur,
   - la récupération continue d'une eau traitée au niveau d'un moyen (30, 30') de récupération du fluide traité disposé en aval de ladite zone de tranquillité (27, 209), la zone de transition étant intercalée entre la zone d'expansion et les moyens de déflexion.

2. Procédé selon la revendication 1 dans lequel le taux d'expansion moyen du lit de particules de média adsorbant est compris entre 10% et 90%.

3. Procédé selon la revendication 2 dans lequel le taux d'expansion moyen du lit de particules de média adsorbant est voisin de 60%.

4. Procédé selon l'une des revendications 1 à 3 dans lequel la concentration en particules de média adsorbant dans ledit réacteur est comprise entre 1 g/l et 100 g/l.

5. Procédé selon l'une quelconque des revendications 1 à 4, dans lequel le fluide traité est recirculé, au moins en partie, dans ledit réacteur.

6. Procédé selon l'une quelconque des revendications 1 à 5, comprenant en outre :

   - une extraction, de manière continue ou de manière séquentielle, d'une partie du lit de particules de média adsorbant dudit réacteur ; et,
   - une injection de particules de média adsorbant, neuves ou régénérées, de telle sorte à conserver une concentration constante en particules de média adsorbant dans ledit réacteur.

7. Procédé selon la revendication 6, comprenant :

   - une séparation solide/liquide de la partie du lit de particules de média adsorbant extrait, permettant de récupérer une phase liquide ; et,
   - une injection de la phase liquide dans ledit réacteur.

8. Procédé selon l'une quelconque des revendications 6 ou 7, comprenant en outre :

   - une prise d'échantillon dans le lit de particules de média dudit réacteur ; et,
   - une analyse du taux de saturation en substances polluantes des particules de média adsorbant dudit échantillon ;

   l'extraction d'une partie du lit de particules de média adsorbant dudit réacteur étant mise en oeuvre quand le taux de saturation dépasse une valeur seuil.

**Patentansprüche**

1. Verfahren zur Behandlung eines Fluids, umfassend:

   - Bereitstellen, in einem Reaktor (2, 2'), von Partikeln (13, 13') eines adsorbierenden Mediums, bestehend aus kalibrierten Körnern oder Mikrokörnern von Aktivkohle mit einer Granulometrie zwischen 400 $\mu$m und 1300 $\mu$m, wobei die Konzentration von Partikeln des adsorbierenden Mediums in dem genannten Reaktor zwischen 1 g/l und 300 g/l beträgt;
   - kontinuierliches Einspritzen von zu behandelndem Wasser auf der Höhe eines Mittels (10, 10') zum Einspritzen und Verteilen von zu behandelndem Fluid im unteren Teil des genannten Reaktors, um einen aufsteigenden Strom (90, 90') von Fluid mit einer Geschwindigkeit zwischen 20 und 40 m/h zu bilden, und das Bett aus Partikeln des adsorbierenden Mediums zu fluidisieren, indem eine Expansionszone (25) des Betts aus Partikeln des adsorbierenden Mediums und eine Übergangszone (26) gebildet werden, die weniger dicht an Partikeln des adsorbierenden Mediums ist als die genannte Expansionszone,
   - Verringern der Geschwindigkeit des genannten aufsteigenden Stroms von Fluid und Bilden einer Fluidruhezone (27, 209) aufgrund von Mitteln (20, 200) zur Ablenkung des Fluids, die im oberen Teil des Reaktors bereitgestellt sind,
   - kontinuierliches Rückgewinnen eines behandelten Wassers auf der Höhe eines Mittels (30, 30') zur Rückgewinnung von behandeltem Fluid, das stromabwärts von der genannten Ruhezone (27, 209) angeordnet ist,

   wobei die Übergangszone zwischen der Expansionszone und den Ablenkmitteln angeordnet ist.

2. Verfahren nach Anspruch 1, wobei die mittlere Expansionsrate des Betts aus Partikeln des adsorbierenden Mediums zwischen 10 % und 90 % beträgt.

3. Verfahren nach Anspruch 2, wobei die mittlere Expansionsrate des Betts aus Partikeln des adsorbierenden Mediums nahe bei 60 % liegt.

4. Verfahren nach einem der Ansprüche 1 bis 3, wobei die Konzentration von Partikeln des adsorbierenden Mediums in dem genannten Reaktor zwischen 1 g/l und 100 g/l beträgt.

5. Verfahren nach einem der Ansprüche 1 bis 4, wobei das behandelten Fluid mindestens teilweise in dem genannten Reaktor rezirkuliert wird.

6. Verfahren nach einem der Ansprüche 1 bis 5, ferner umfassend:

   - kontinuierliches oder sequentielles Extrahieren eines Teils des Betts aus Partikeln des adsorbierenden Mediums aus dem genannten Reaktor; und
   - Einspritzen von Partikeln des adsorbierenden Mediums, neu oder regeneriert, derart, dass eine konstante Konzentration von Partikeln des adsorbierenden Mediums in dem genannten Reaktor aufrechterhalten wird.

7. Verfahren nach Anspruch 6, umfassend:

   - Fest/Flüssig-Trennen des extrahierten Teils des Betts aus Partikeln des adsorbierenden Mediums, wodurch es gestattet wird, eine Flüssigphase rückzugewinnen; und
   - Einspritzen der Flüssigphase in den genannten Reaktor.

8. Verfahren nach einem der Ansprüche 6 oder 7, ferner umfassend:

   - Entnehmen einer Probe in dem Bett aus Partikeln des Mediums aus dem genannten Reaktor; und
   - Analysieren der Sättigungsrate mit Verschmutzungssubstanzen der Partikel des adsorbierenden Mediums der genannten Probe;
   - Extrahieren eines Teils des Betts aus Partikeln des adsorbierenden Mediums aus dem genannten Reaktor, das durchgeführt wird, wenn die Sättigungsrate einen Schwellenwert überschreitet.

**Claims**

1.  Method for treating a fluid to be treated comprising:

    - the supplying in a reactor (2, 2') of adsorbent media particles (13,13') consisting of calibrated grains or micrograins of activated carbon with a particle size comprised between 400 μm and 1300 μm in which the concentration of adsorbent media particles in said reactor is comprised between 1 g/L and 300 g/L;
    - the continuous injection of fluid to be treated at a means (10, 10') for injecting and distributing fluid to be treated at the bottom part of the reactor in order to form an upflow (90, 90') of fluid having a speed comprised between 20 m/h and 40 m/h and to fluidize the bed of adsorbent media particles by forming an area of expansion (25) of the bed of adsorbent media particles and a transition area (26) less dense in adsorbent media particles than said area of expansion,
    - the reduction of the speed of said upflow of fluid and the formation of a fluid tranquil zone (27, 209) with means (20, 200) for deflecting fluid disposed at the top part of the reactor,
    - the continuous recovery of treated water at the means (30, 30') for recovering treated fluid disposed downstream from said tranquil zone (27, 209),

    the transition area being interposed between the area of expansion and the deflection means.

2.  Method according to claim 1, wherein the average rate of expansion of the bed of adsorbent media particles is from 10% to 90%.

3.  Method according to claim 2, wherein the average rate of expansion of the bed of adsorbent media particles is close to 60%.

4.  Method according to any one of the claims 1 to 3, wherein the concentration of adsorbent media particles in said reactor is from 1 g/L to 100 g/L.

5.  Method according to any one of the claims 1 to 4, wherein the treated fluid is recirculated at least in part in said reactor.

6.  Method according to any one of the claims 1 to 5, further comprising:

    - a continuous or sequential extraction of a part of the bed of adsorbent media particles from said reactor; and,
    - an injection of fresh or refreshed adsorbent media particles in such a way as to preserve a constant concentration of adsorbent media particles in said reactor.

7.  Method according to claim 6, comprising:

    - a solid/liquid separation of the extracted part of the bed of adsorbent media particles, enabling the recovery of a liquid phase; et,
    - an injection of the liquid phase into said reactor.

8.  Method according to any one of the claims 6 or 7, further comprising:

    - a taking of a sample from the bed of adsorbent media particles of said reactor; and,
    - an analysis of the rate of saturation in pollutant substances of the adsorbent media particles of said sample;

    the extraction of a part of the bed of adsorbent media particles from said reactor being implemented when the rate of saturation surpasses a threshold value.

EP 3 797 092 B1

Fig. 1

EP 3 797 092 B1

Fig. 2

15'

30'

200

13'

10'

90'

2'

**FIGURE 3**

**Figure 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2874913 A
- FR 3003477 A
- FR 2694209